# EUROPEAN PATENT SPECIFICATION

(11) **EP 1 911 413 B1**
(45) Date of publication and mention of the grant of the patent: **06.01.2010**
(21) Application number: 07115760.6
(22) Date of filing: 05.09.2007
(51) Int. Cl.: A61C 8/00

(54) **Dental implant system**
Zahnimplantatsystem
Système d'implant dentaire

(30) Priority: 10.10.2006 US 544731
(43) Date of publication of application: 16.04.2008
(73) Proprietor: Ho, Chih-Chung, 843 Meinong Township Kao hsiung (TW)
(72) Inventor: Ho, Chih-Chung, 843 Meinong Township Kao hsiung (TW)
(74) Representative: 2K Patentanwälte Blasberg Kewitz & Reichel

(56) References cited:
- EP-A- 1 695 671
- US-B1- 6 386 877
- US-B1- 6 854 972

## Description

### 1. Field of the Invention

The present invention relates to a dental implant, more particularly, a dental implant with an isthmus on protrusion.

### 2. Description of the Related Art

The occlusal force can be divided into vertical force and horizontal force. The vertical force for the implant is the compression force at the bottom and the shearing force at the lateral. The horizontal force is a tipping force for the implant, which means both the ends arc most forced, with different directions.

Because the horizontal force toward the proximal side is co-bolstered by the adjacent teeth (or implants), such force is less detrimental to the alveolar bone. The dental implant catches the bone to resist the occlusal force. Therefore, to have implants catch enough alveolar bone for the occlusal force, yet keep the alveolar bone from being destroyed is the basic and most important consideration for dental implant design.

Since the advent of titanium dental implant, many dental implants have the shape of natural root lingered. But as a matter of fact, the supporting mechanism of the natural tooth and that of the implant are not the same. The natural tooth is suspended in the bone by the ligaments, the implant is "fixed" to the bone. Mimicking the morphology of the root of a tooth docs not make sense.

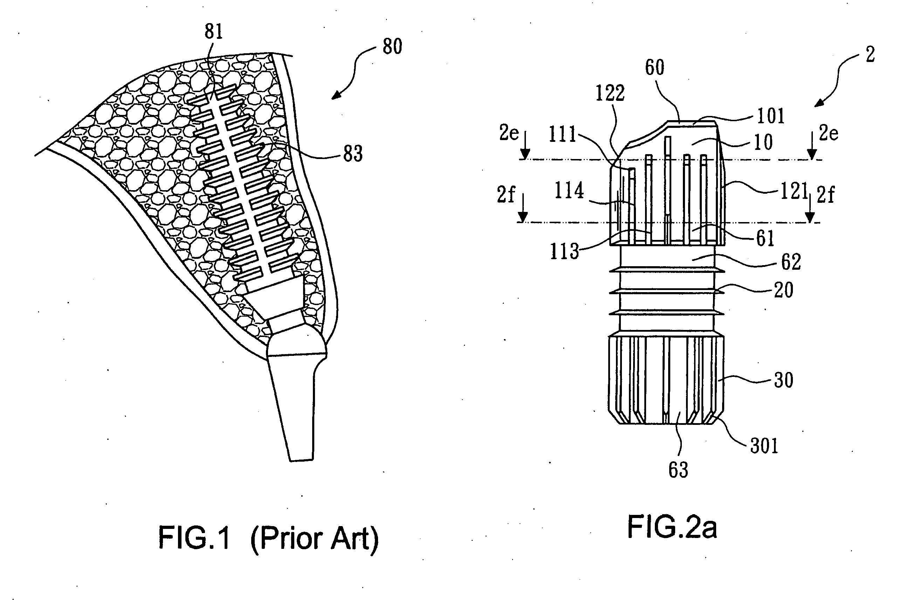

Referring to FIG. 1, the conventional dental implant 80 comprises a central portion 81 and a plurality of fins 83. The central portion 81 is a tapering shape cylinder. Tapering of the central portion 81 of the dental implant 80 would reduce the capability to resist the vertical force and the horizontal force. And as is seen clinically, the deeper portion of alveolar bone always has ample space for the implant. Another drawback for many contemporary implants is the threads or fins 83. The threads or fins are basically horizontal projections from the central portion 81. The fins (horizontal projections) catch bone in such manners that they are significantly less equipped for horizontal forces than for vertical forces. This may explain why the successful rate of implant in the maxilla is always lower than that in the mandible. The implants in the maxilla receive more horizontal force than those in the mandible. Compared with the lower anterior, the upper anterior is always bigger than its lower counterpart, which may imply that horizontal force is more difficult to deal with.

U.S. Pat. No. 4,738,623 discloses a dental implant system considered by many dentists one of the best implant systems, also has the disadvantages mentioned above. Like other implant, the entrance to the bone is the most vulnerable. The conventional dental implant deals with the problem seriously. According to it's manual, the conventional dental implant is implanted 1mm ∼ 2mm below the alveolar crest. Later, some of the bone is removed, and the abutment and crown is connected to the conventional dental implant. But as is clinically observed, in the long run the bone would retreat to the shoulder of the conventional dental implant. Although the material of the implant and that of the abutment post are the same, the abutment post doesn't get osseointegrated. Maybe there is micro-rotation of the abutment post. An un-osseointegrated post in the bone is a highway for the hostile bacteria. In some cases, the bony deterioration continued, and the implant exposures were inevitable. The exposures were often on the horizontal-force-bearing side. Such exposure would embarrass the patient and leave a hard work for the dentist.

Furthermore, it seems to be a mystery that a class I occlusion, when turns into edentulous, finally has a class III bony relationship. But if you take the horizontal force (of occlusion) into consideration, the outcome is not surprising. Most of the horizontal force exerts on the upper buccal side of maxilla, and on the upper lingual side of mandible. When the tooth is lost, the alveolar plate that bears the force disappears faster than the opposite side that does not bear the force. The horizontal forces have certain directions.

EP 1 695 671 A1 of the applicant discloses a dental implant according to the preamble of claim 1, comprising a central portion, having a first section, a second section, a horizontal direction and a vertical direction; at least one proximal plate, projecting from the first section of the central portion extending along the vertical direction; at least one fin projecting from the second section of the central portion along the horizontal direction; and two protrusions, disposed on a non-proximal side of the first section and on opposite sides thereof. The protrusions are curved.

Further dental implants are disclosed in US 6,854,972 B1 and US 6,386,877 B1.

It is an object of the present invention to provide an improved dental implant capable of better resisting horizontal forces to thereby avoid overloading at the upper buccal side (or lingual side) of the dental implant and diminish the chance of bony deterioration.

### SUMMARY OF THE INVENTION

This problem is solved by a dental implant according to claim 1. Further advantageous embodiments arc the subject-matter of the further dependent claims.

Before the description of the dental implant of the invention, some terminology must be clearly defined. The term "lower" is not related to gravity, it means in the deeper bone, and "upper" means it's proximal to the gingiva or crown. And "buccal" means buccal or facial, "lingual" means lingual or palatal. "Vertical" means in the direction along with the longitudinal axis of the dental implant, "horizontal" means in the direction that is perpendicular to "vertical". "Front" is toward the horizontal-force-bearing side; "Rear" is toward the non-horizontal-force-bcaring side.

The dental implant according to the present invention comprises: a central portion, at least one proximal plate, at least one fin and at least one protrusion. The central portion has a first section, a second section, a horizontal direction and a vertical direction. The proximal plate projects from the first section of the central portion along the horizontal direction and extends along the vertical direction. The fin projects from the second section of the central portion along the horizontal direction. The protrusions are disposed on buccal or lingual, one of the protrusions has an isthmus.

The dental implant of the present invention pays more attention to the horizontal force that is usually ignored by other systems. According to the present invention, the at least one protrusion with isthmus is suggested to be placed toward the non-horizontal-force-bearing side, therefore the dental implant of the present invention can catch the bony structure behind the respective proximal plate. Combined with the proximal plate, the dental implant can catch maximum bony structure to resist horizontal force, and the proximal plates naturally shun a lot of vertical force. By doing so, the implant of the invention avoids overloading at the upper buccal side (or lingual side). Therefore, the chance of bony deterioration is diminished.

### BRIEF DESCRIPTION OF THE DRAWINGS

FIG. 1 is a conventional dental implant of the prior art after healing.
FIG. 2a is a proximal side elevational view of a dental implant according to a first embodiment of the invention.
FIG. 2b is a buccal side elevational view of the dental implant according to the first embodiment of the invention.
FIG. 2c is a downward perspective view of the dental implant according to the first embodiment of the invention.
FIG. 2d is an upward perspective view of the dental implant according to the first embodiment of the invention.
FIG. 2e is a cross-sectional view through line 2e of FIG. 2a of the dental implant according to the first embodiment of the invention.
FIG. 2f is a cross-sectional view through line 2f of FIG. 2a of the dental implant according to the first embodiment of the invention.
FIG. 2g shows the dental implant according to the first embodiment of the invention after healing.
FIG. 3a is a proximal side elevational view of a dental implant according to a second embodiment of the invention.
FIG. 3b is a buccal side elevational view of the dental implant according to the second embodiment of the invention.
FIG. 3c is a downward perspective view of the dental implant according to the second embodiment of the invention.
FIG. 3d is an upward perspective view of the dental implant according to the second embodiment of the invention.
FIG. 3e is a cross-sectional view through line 3e of FIG. 3a of the dental implant according to the second embodiment of the invention.
FIG. 3f is a cross-sectional view through line 3f of FIG. 3a of the dental implant according to the second embodiment of the invention.

### DETAILED DESCRIPTION OF THE INVENTION

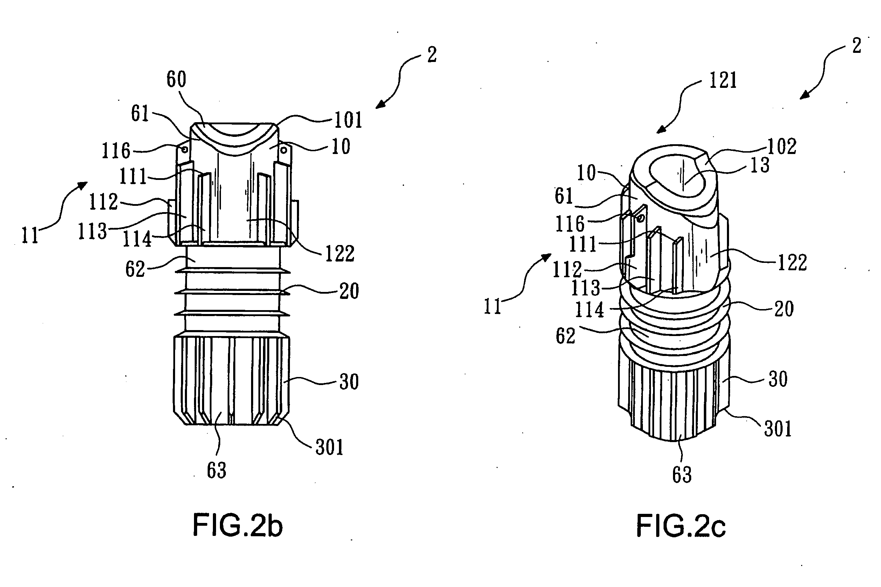

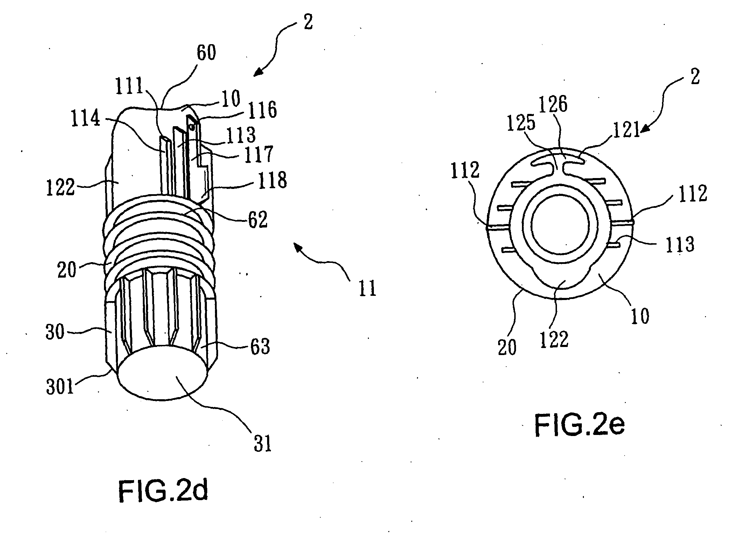

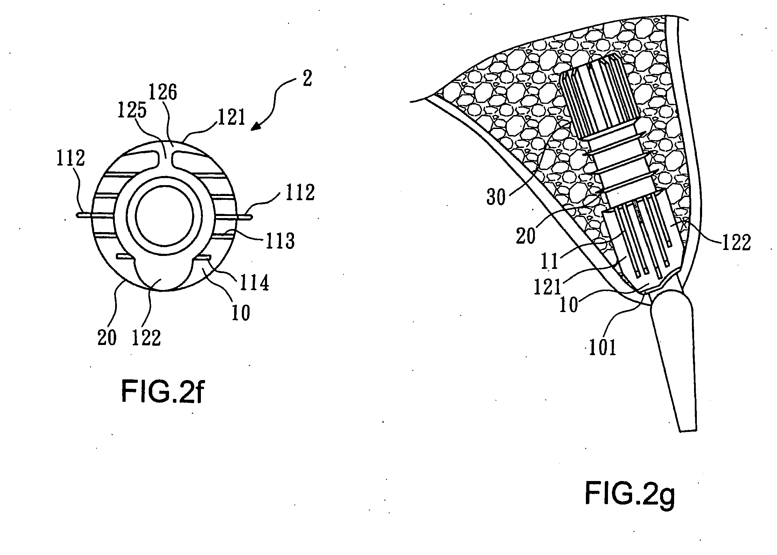

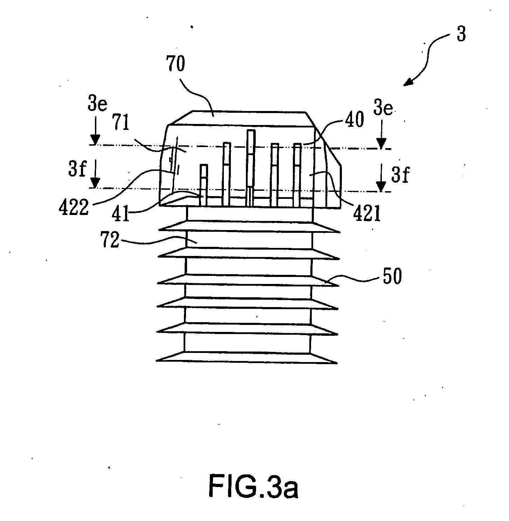

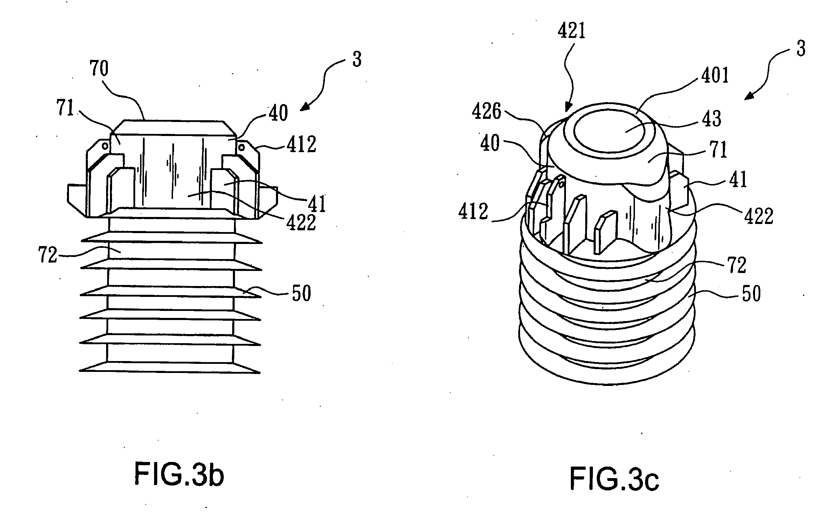

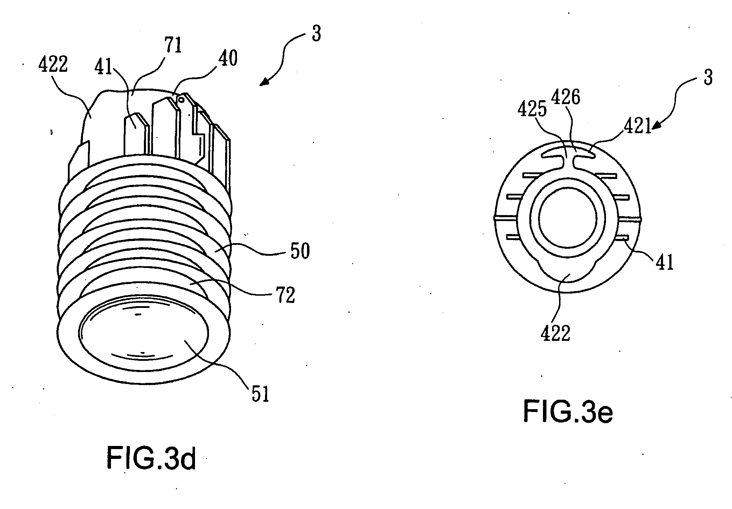

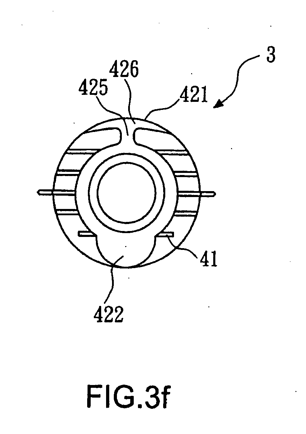

Referring to FIGs. 2a, 2b, 2c, 2d, 2e, 2f and 2g, they show a dental implant according to a first embodiment of the invention. The dental implant 2 that would receive more horizontal force than vertical force (from occlusion) is named Type A implant. Generally the Type A implant would be for the maxillary anteriors. Referring to FIGs. 3a, 3b, 3c, 3d, 3e and 3f, they show a dental implant according to a second embodiment of the invention. The dental implant 3 that would receive more vertical force is named Type B implant.

The dental implant of the present invention is generally a cylindrical and un-tapered implant that is later to connect an abutment for the prosthesis. The dental implant of the present invention is supposed to be tapped or knocked into the bony socket.

Referring to FIGs. 2a to 2g again, the dental implant 2 comprises: a central portion 60, at least one upper proximal plate 11, at least one fin 20, at least one lower plate 30 and at least one protrusion 121 and 122. The protrusion 121 has an isthmus, and the protrusion 122 is a rounded protrusion. The central portion 60 has a first section 61, a second section 62, a third section 63, a horizontal direction and a vertical direction. In the embodiment, the central portion 60 is a cylindrical shape and is not tapered.

The central portion 60 further comprises a neck 10 disposed on the first section 61. The height of the neck 10 is about 0.5mm to 3.0mm. The neck 10 has an edge 101 with some rounding, and the edge 101 is inward and upward to the longitudinal axis of the dental implant. The neck 10 had better be as narrow as possible if it's mechanically approved. With such design the neck 10 has a rim 102, and the rim 102 on the neck 10 would be narrow. The rim 102 toward the buccal side is trimmed to simulate the curvature of buccal gingival. The trimmed rim 102 begins from proximal sides downwardly to the buccal side, and is preferably concave. The trimmed rim 102 would allow the surgeon not to bury the implant deep in the bone without worrying the exposure of dental implant on the buccal side. And the trimmed rim 102 is preferably to match the asymmetrically resorbed ridge. The depth of the trimmed rim 102 is between 0.5 mm to 2 mm.

Following the neck 10 are the upper proximal plate 11 and the buccal and lingual protrusions. The at least one upper proximal plate 11 projects from the first section 61 of the central portion 60 along the horizontal direction, and extends along the vertical direction. In the embodiment, a plurality of upper proximal plates are mounted on the first section 61 of the central portion 60. The upper proximal plates 11 preferably are comprehensively pruned at the upper edge to form pruned upper edges 111.

The upper proximal plates 11 are disposed on a proximal side of the first section 61, and the first section 61 has a buccal rounded protrusion and a lingual protrusion with isthmus.

Referring to FIG. 2e and 2f, in this embodiment, the dental implant 2 comprises a first protrusion 121 and a second protrusion 122, and the first protrusion 121 and the second protrusion 122 are disposed on the lingual and buccal sides of the first section 61 respectively. The first protrusion 121 comprises an isthmus 125 and an enlarged portion 126. The enlarged portion 126 extends from the isthmus 125. The first protrusion 121 is disposed on a non-horizontal-force-bearing side, and the second rounded protrusion 122 is disposed on a horizontal-force-bearing side. The non-horizontal-force-bearing side is generally a lingual side of maxilla, or the non-horizontal-force-bearing side is generally a buccal side of mandible.

The first section 61 comprises an upper area and a lower area. FIG. 2e shows a cross-sectional view on the upper area of the first section 61 of the dental implant 2, and FIG. 2f shows a cross-sectional view on the lower area of the first section 61 of the dental implant 2. The first protrusion 121 and the second protrusion 122 are pruned at the upper area (FIGs. 2c and 2e). Together with the pruned plates, the pruned protrusions will leave more space for the surrounding bone. Therefore, the first protrusion 121 on the upper area (FIG. 2e) is smaller than the first protrusion 121 on the lower area (FIG. 2f), and the second protrusion 122 on the upper area (FIG. 2e) is smaller than the second protrusion 122 on the lower area (FIG. 2f). The shape of the enlarged portion 126 on the lower area is corresponding to the shape of a drilled socket for the dental implant 2.

According to the invention, the protrusion with isthmus is suggested to be placed toward the non-horizontal-force-bearing side. The dental implant of the present invention can catch the bony structure behind the proximal plate. Combined with the proximal plate, the dental implant can catch maximum bony structure to resist horizontal force, and naturally the plates and protrusions avoid a lot of vertical force. Therefore, the possibility of bony deterioration is reduced because the upper part does not bear too much occlusal force. Most of the vertical force is conducted to the deeper and safer area.

The length of the first section 61 with the upper proximal plate is about 1/4 to 2/5 of the total length of the central portion 60. Because the horizontal force is least felt in the middle section of the central portion, the plates do not appear in the middle section of the central portion.

The proximal plates comprise at least one positioning proximal plate 112. The positioning proximal plate 112 has a normal part 117 and a lower part 118. The width of the normal part 117 of the positioning proximal plate 112 is equal to that of the proximal plate 11. The lower part 118 of the positioning proximal plate 112 extends outside the outer diameter of the fin 20. Therefore, the width of the lower part 118 of the positioning proximal plate 112 is bigger than the other proximal plates 11. In the embodiment, there are two positioning proximal plates 112 respectively disposed on the proximal sides for positioning the dental implant 2. The positioning proximal plates 112 are designed to keep the dental implant in the bone with correct direction after surgery. The lower and lateral edges of the lower part 118 are sharp, and the upper edge of the lower part 118 is dull. The lower part 118 of the positioning proximal plate 12 preferably is pruned at the lower edge to form a pruned lower edge, and the pruned lower edge of the lower part is sharp. The sharp edges of the positioning plates 112 make the insertion of the implant easier and the dull edges make the implant has less chance to exfoliate.

Furthermore, the proximal plates comprise at least one pulling proximal plate 112. In the embodiment, the positioning proximal plate is the pulling proximal plate. The length of the pulling proximal plate 112 is higher than other proximal plates. The pulling proximal plate 112 has a pulling hole 116 for receiving a pulling device to pull the dental implant 2 in case of any unwanted insertion depth during surgery. Besides, The pulling proximal plate may have a pulling groove for receiving a pulling device to pull the dental implant.

The proximal plates 11 comprise at least one normal proximal plate 113. In the embodiment, the length of the normal proximal plate 113 is lower than that of the pulling proximal plate 112; and the width of the normal proximal plate 113 is smaller than that of the lower part 118 of the positioning proximal plate 112. That is, the width of the normal proximal plate 113 is equal to the outer diameter of the fin 20.

The proximal plates 11 comprise at least one small proximal plate 114. The small proximal plate 114 is always next to the rounded protrusion. In the embodiment, the length of the small proximal plate 114 is lower than that of the normal proximal plate 113; and the width of the small proximal plate 114 is smaller than that of the normal proximal plate 113.

Therefore, the length of the proximal plates 11 is gradually lower from the pulling proximal plate 112 to the small proximal plate 114, and the width of the proximal plates 11 is gradually smaller from the lower part 118 of the positioning proximal plate 112 to the small proximal plate 114.

Next to the plates 11, the fin 20 projects from the second section 62 of the central portion 60 along the horizontal direction. In the embodiment, a plurality of fins are circularly mounted on the peripheral of the second section 62 of the central portion 60. The fins 20 are not tapered. The length of the second section 62 with the fins is about 1/5 to 1/2 of the length of the central portion 60.

The lower plate 30 is disposed on the third section 63 of the central portion 60. The length of the third section 63 with the lower plate is about 1/4 to 2/5 of the total length of the central portion 60. The projecting angels of the lower plate are suggested to be perpendicular to the tangent of the central portion 60. The lower plate 30 has a pruned lower edge 301. Near the bottom 31 of the central portion 60, the edges of the plates 30 are pruned to match the bony socket; that is, to match the shape of the drill.

The central portion 60 further comprises the bottom 31 and a well 13. The bottom 31 is flat. The well 13 is going to be connected to the abutment and has an opening at the top of the central portion 60.

Referring to FIGs. 3a, 3b, 3c, 3d, 3e and 3f, the dental implant 3 comprises: a central portion 70, at least one proximal plate 41, at least one fin 50 and at least one protrusion 421, 422. The central portion 70 has a first section 71, a second section 72, a horizontal direction and a vertical direction. The central portion 70 further comprises a neck 40 disposed on the first section 71. The neck 40 of the second embodiment is similar to the neck 10 of the first embodiment. But the neck 40 here is shorter. The neck 40 comprises a rim 401. The rim 401 is flat or is less trimmed.

Each proximal plate 41 projects from the first section 71 of the central portion 70 along the horizontal direction, and extends along the vertical direction. The proximal plates 41 and the protrusions 421, 422 on buccal and lingual sides are also similar to the previous description in the first embodiment. The first protrusion 421 comprises an isthmus 425 and an enlarged portion 426. The first protrusion 421 and the second protrusion 422 are pruned at the upper area (FIGs. 3c and 3e). Therefore, the first protrusion 421 on the upper area (FIG. 3e) is smaller than the first protrusion 421 on the lower area (FIG. 3f), and the second protrusion 422 on the upper area (FIG. 3e) is smaller than the second protrusion 422 on the lower area (FIG. 3f). But the ratio differs. The length of the first section 71 with the proximal plate 41 is about 1/6 to 2/5 of the total length of the central portion 70. The positioning proximal plate and the pulling proximal plate 412 are similar to the previous description in the first embodiment.

The fin 50 projects from the second section 72 of the central portion 70 along the horizontal direction. The central portion 70 further comprises a bottom 51 and a well 43. The fins 50 go down to the bottom 51 without shrinking their diameters. The bottom 51 is concave. The bone at the bottom receives a lot of compression force. The concave bottom 51 disperses the force. This is especially important for the short dental implant with large diameter. It needs a drill specially designed to shape the bottom of the bony socket if any length deeper is crucial.

## Claims

1. A dental implant (2; 3), comprising:
a central portion (60; 70), having a first section (61; 71), a second section (62; 72), a horizontal direction and a vertical direction;
at least one proximal plate (11; 41), projecting from the first section (61; 71) of the central portion extending along the vertical direction;
at least one fin (20; 50), projecting from the second section (62; 72) of the central portion along the horizontal direction; and
at least one protrusion (121; 421), disposed on a non-proximal side of the first section,
**characterized in that** said at least one protrusion (121; 421) has an isthmus (125; 425).

2. The dental implant according to claim 1, wherein the proximal plate (11; 41) is disposed on a proximal side of the first section (61), and the first section has a rounded protrusion (122) and a protrusion (121) with isthmus.

3. The dental implant according to claim 2, wherein the dental implant comprises a first protrusion and a second protrusion, the first protrusion (121) comprises the isthmus (125) and an enlarged portion (126), the enlarged portion (126) extends from the isthmus, the first protrusion (121) is disposed on a lingual side and the second protrusion (122) is disposed on a buccal side.

4. The dental implant according to claim 3, wherein the first section comprises an upper area and a lower area, the first protrusion and the second protrusion are pruned at the upper area.

5. The dental implant according to claim 1, wherein the proximal plates comprise at least one positioning proximal plate (112), the positioning proximal plate has a normal part (117) and a lower part (118), the lower part of the positioning proximal plate extends outside the outer diameter of the fin (20).

## Patentansprüche

1. Zahnimplantat (2; 3) umfassend:
einen zentralen Abschnitt (60; 70), der einen ersten Abschnitt (61; 71), einen zweiten Abschnitt (62; 72), eine horizontale Richtung und eine vertikale Richtung aufweist;
zumindest eine proximale Platte (11; 41), die von dem ersten Abschnitt (61; 71) des zentralen Abschnitts vorsteht und sich entlang der vertikalen Richtung erstreckt;
zumindest eine Rippe (20; 50), die von dem zweiten Abschnitt (62; 72) des zentralen Abschnitts entlang der horizontalen Richtung vorsteht; und
zumindest einen Vorsprung (121; 421), der auf einer nicht-proximalen Seite des ersten Abschnittes vorgesehen ist,
**dadurch gekennzeichnet, dass** der zumindest eine Vorsprung (121; 421) einen Isthmus bzw. verengten Abschnitt (125; 425) aufweist.

2. Zahnimplantat nach Anspruch 1, wobei die proximale Platte (11; 41) auf einer proximalen Seite des ersten Abschnittes (61) vorgesehen ist und der erste Abschnitt einen abgerundeten Vorsprung (122) und einen Vorsprung (121) mit einem Isthmus bzw. verengten Abschnitt auf weist.

3. Zahnimplantat nach Anspruch 2, wobei das Zahnimplantat einen ersten Vorsprung und einen zweiten Vorsprung umfasst, wobei der erste Vorsprung (121) den Isthmus (125) bzw. den verengten Abschnitt und einen erweiterten Abschnitt (126) aufweist, wobei sich der erweiterte Abschnitt (126) ausgehend von dem Isthmus bzw. verengten Abschnitt erstreckt, der erste Vorsprung (121) auf einer der Zunge zugewandten Seite vorgesehen ist und der zweite Vorsprung (122) auf einer der Wange zugewandten Seite vorgesehen ist.

4. Zahnimplantat nach Anspruch 3, wobei der erste Ab schnitt einen oberen Bereich und einen unteren Bereich aufweist, wobei der erste Vorsprung und der zweite Vorsprung in dem oberen Bereich gekürzt bzw. zurück geschnitten sind.

5. Zahnimplantat nach Anspruch 1, wobei die proximalen Platten zumindest eine proximale Platte (112) zur Positionierung aufweist, wobei die proximale Platte zur Positionierung einen normalen bzw. lotrechten Teil (117) und einen unteren Teil (118) aufweist, wobei sich der untere Teil der proximalen Platte zur Positionierung außerhalb des Außenumfangs der Rippe (20) erstreckt.

## Revendications

1. Un implant dentaire (2; 3), comportant :
une partie centrale (60; 70), ayant une première section (61; 71), une deuxième section (62; 72), une direction horizontale et une direction verticale;
au moins une plaque proximale (11; 41), se projetant depuis la première section (61; 71) de la partie centrale s'étendant le long de la direction verticale;
au moins une ailette (20; 50), se projetant depuis la deuxième section (62; 72) de la partie centrale le long de la direction horizontale; et
au moins une protubérance (121; 421), disposée d'un côté non-proximal de la première section,
**caractérisé en ce que** la ou les protubérance(s) (121; 421) présente(nt) un isthme (125; 425).

2. L' implant dentaire selon la revendication 1, dans lequel la plaque proximale (11; 41) est disposée sur un côté proximal de la première section (61), et la première section présente une protubérance de forme ronde (122) et une protubérance (121) avec isthme.

3. L' implant dentaire selon la revendication 2, dans lequel l'implant dentaire comporte une première protubérance et une deuxième protubérance, la première protubérance (121) comporte l'isthme (125) et une partie agrandie (126), la partie agrandie (126) se prolongeant de l'isthme, la première protubérance (121) étant disposée sur un côté lingual et la deuxième protubérance (122) étant disposée sur un côté buccal.

4. L' implant dentaire selon la revendication 3, dans lequel la première section comporte une surface supérieure et une surface inférieure, la première protubérance et la seconde protubérance étant taillées du côté de la surface supérieure.

5. L' implant dentaire selon la revendication 1, dans lequel les plaques proximales comportent au moins une plaque de positionnement proximale (112), la une plaque de positionnement proximale ayant une partie normale (117) et une partie inférieure (118), la partie inférieure de la plaque de positionnement proximale se prolongeant vers l'extérieur du diamiètre extérieur de l'ailette (20).
